# EUROPEAN PATENT APPLICATION

(11) **EP 1 998 512 A1**
(43) Date of publication of application: **03.12.2008**
(21) Application number: 07739011.0
(22) Date of filing: 19.03.2007
(51) Int. Cl.: H04L 12/56, H04J 3/00

(54) **HOST STATION AND PACKET TRANSMITTING METHOD**

(30) Priority: 20.03.2006 JP 2006077817
(71) Applicant: NTT DoCoMo, Inc., Chiyoda-ku Tokyo 100-6150 (JP)
(72) Inventor: HARADA, Atsushi, Chiyoda-ku, Tokyo;1006150 (JP); ISHII, Minami, Chiyoda-ku, Tokyo;1006150 (JP); KATO, Yasuhiro, Chiyoda-ku, Tokyo;1006150 (JP)
(74) Representative: HOFFMANN EITLE
(86) International application number: PCT/JP2007/055568
(87) International publication number: WO 2007/108448

(57) **Abstract**

An upper node station for transmitting received packets to a mobile station via a base station includes a quality information extracting unit configured to extract quality information from the received packets; and a multiplexing unit configured to assign each of the received packets to a bearer service based on the extracted quality information to multiplex the received packets. The upper node station may further include a quality information management table configured to associate a packet header with the bearer service for each mobile station, and the multiplexing unit may identify the bearer service based on a packet header in each of the received packets referring to the quality information management table.

## Description

### BACKGROUND OF THE INVENTION

### 1. Field of the Invention

The present invention relates to an upper node station for transmitting a received packet to a mobile station via a base station. The present invention also relates to a packet transmission method of transmitting a packet received by an upper node station to a mobile station via a base station.

### 2. Description of the Related Art

With recent developments in IP (Internet Protocol) communications, radio networks need to support various data such as computer data, voice, and real-time video data. One of the technologies for supporting various data is a QoS (Quality of Service) technology. One approach for implementing the QoS technology is a guaranteed service technology (quality assurance technology) referred to as Diffserv (Differentiated Services) (see RFC 2475, "An Architecture for Differentiated Services", for example).

Diffserv specifies one of the following DSCPs (Diffserv Code Points) in a packet header to prioritize the packet based on the class of the specified DSCP.
1. BE (Best Effort): BE is used for transmitting best-effort traffic.
2. AF (Assured Forwarding): AF is used for transmitting an adaptive application. AF corresponds to BE with a minimum guaranteed bandwidth.
3. CF (Class Selector): CF maintains compatibility with a precedence field defined in a TOS field for IPv4.
4. EF (Expedited Forwarding): EF guarantees an end-to-end transmission bandwidth.

### SUMMARY OF THE INVENTION

### [Problem(s) to be solved by the Invention]

As described above, Diffserv uses four classes. However, Diffserv with these four classes may not fully satisfy requirements for quality of service, when Diffserv is used for transmitting various data over a radio network. For example, a need for further classes may arise when signaling information packets, VoIP (Voice over IP) packets, videophone packets, streaming packets, best-effort packets, and the like are transmitted over the radio network. Thus, it is preferable to achieve a flexible QoS technology for various services that will be transmitted over the radio network in the future.

As described above, each class defined in Diffserv gives a relative transmission priority. Thus, Diffserv may not fully guarantee quality of service, because Diffserv does not take quality information such as a packet loss rate into consideration.

Accordingly, there is a problem in that data with various QoS requirements may not be efficiently transmitted over the radio network only by means of Diffserv. This problem will be more serious when various new services are transmitted over the radio network.

In view of the aforementioned problem in the related art, it is a general object of the present invention to efficiently transmit data with various QoS requirements over the radio network by multiplexing packets with the same QoS requirement at an upper protocol layer.

### [Means for solving the Problem]

In one embodiment of the present invention, in order to solve the problem, there is provided an upper node station for transmitting received packets to a mobile station via a base station, comprising:
a quality information extracting unit configured to extract quality information from the received packets; and
a multiplexing unit configured to assign each of the received packets to a bearer service based on the extracted quality information to multiplex the received packets.

In one embodiment of the present invention, in order to solve the problem, there is also provided a packet transmission method of transmitting packets received by an upper node station to a mobile station via a base station, comprising the steps of:
extracting quality information from the received packets;
assigning each of the received packets to a bearer service based on the extracted quality information to multiplex the received packets; and
transmitting the multiplexed packets to the mobile station via the base station.

### [Effect of the Invention]

According to an embodiment of the present invention, it is possible to efficiently transmit data with various QoS requirements over a radio network.

### BRIEF DESCRIPTION OF THE DRAWINGS

Fig. 1 shows a radio communication system to which an embodiment of the present invention can be applied.
Fig. 2 shows a relationship of bearer services in a radio communication system to which an embodiment of the present invention can be applied.
Fig. 3 shows a block diagram of an upper node station in accordance with an embodiment of the present invention.
Fig. 4 shows an example of a quality information management table stored in the upper node station in accordance with an embodiment of the present invention.
Fig. 5 shows an example of multiplexing various data.
Fig. 6 shows a data flowchart of a packet transmission method in accordance with an embodiment of the present invention.
Fig. 7 shows an example of a relationship between bearer services and Diffserv classes.

### DESCRIPTION OF THE PREFERRED EMBODIMENTS

### [Description of Notations]

10 radio communication system
101 upper node station
103 base station
105 mobile station
MUX multiplexer
111 packet receiving unit
113 quality information extracting unit
115 multiplexing unit
117 quality information management table

### [Best Mode of Carrying Out the Invention]

With reference to the accompanying drawings, a description is given below with regard to preferred embodiments of the present invention.

### [System architecture]

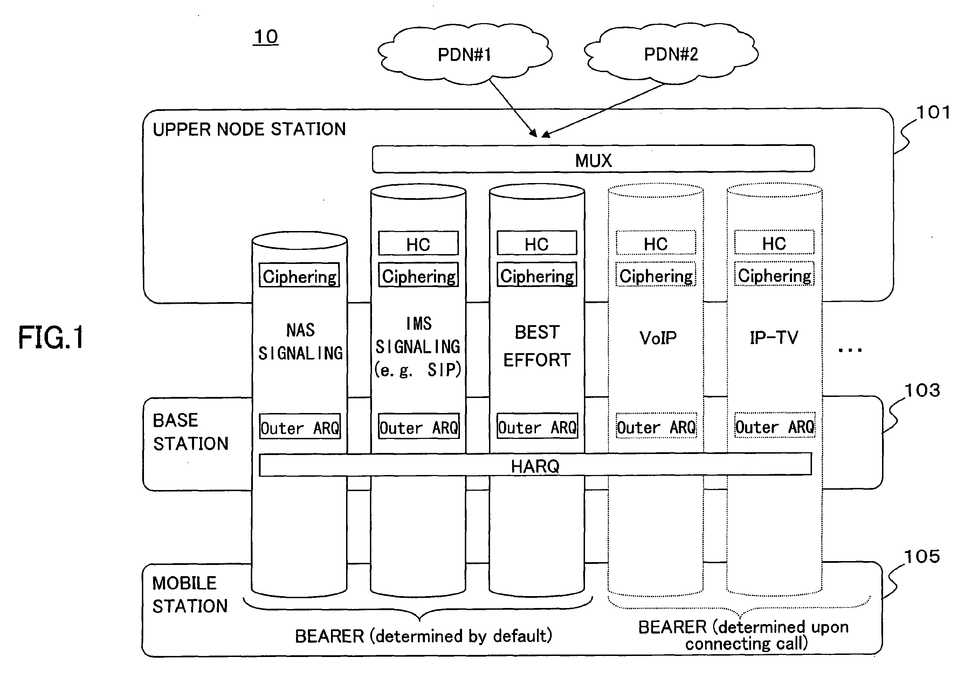

Fig. 1 shows a radio communication system 10 to which an embodiment of the present invention can be applied.

The radio communication system 10 includes an upper node station 101, a base station 103, and a mobile station 105. The upper node station 101 corresponds to a control apparatus such as an access gateway (aGW) which receives data from the other networks and transmits the received data to the mobile station 105 via the base station 103.

In one embodiment of the present invention, the upper node station 101 multiplexes packets with the same QoS requirement at an upper protocol layer to transmit data with various QoS requirements over a radio network. Specifically, the upper node station 101 includes a multiplexer (MUX) for identifying (extracting) quality information from the packets to multiplex the packets with the same QoS requirement.

Then, the upper node station 101 assigns (maps) each of the multiplexed packets to a bearer service to transmit the packets to the mobile station 105 via the base station 103 according to the QoS requirement.

It should be noted that the bearer service refers to a physical or logical service for transmitting a packet over a radio network. Each bearer service is identified by an attribute (capacity, loss rate, delay, and the like) and its value which characterize the bearer service.

Some bearer services may be determined by default, such as a signaling information bearer service and a best-effort bearer service. In addition, some bearer services may be determined upon connecting a call, such as a VoIP service and an IP-TV (Internet Protocol Television) service.

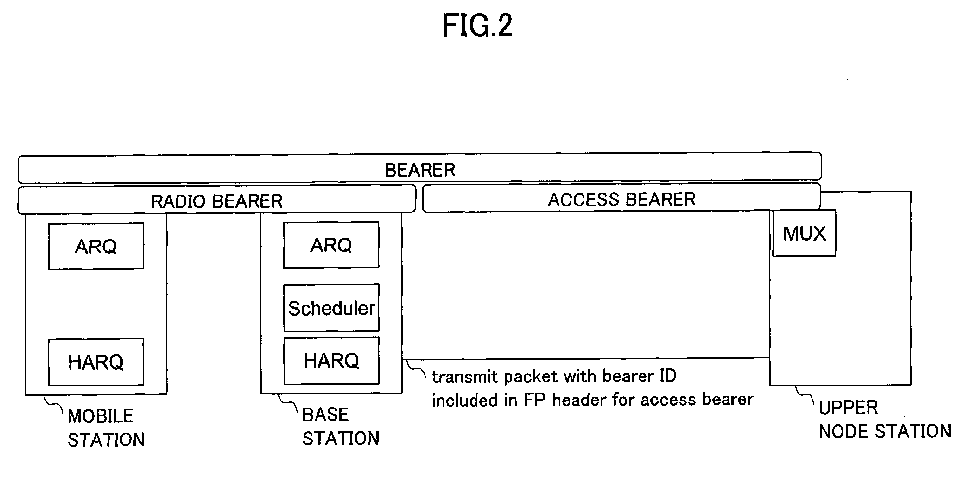

As shown in Fig. 2, a bearer service defined in 3GPP (The 3rd Generation Partnership Project) includes an Access Bearer service provided between the upper node station 101 and the base station 103 and a Radio Bearer service provided between the base station 103 and the mobile station 105.

Using the bearer service defined in 3GPP, the upper node station 101 multiplexes packets with the same QoS requirement and transmits them to the base station 103. Specifically, the upper node station 101 includes a bearer ID in a frame protocol (FP) header to transmit the packets. The bearer ID is an identifier for the bearer service. Then, the base station 103 performs ARQ (Automatic Repeat reQuest) processing, scheduling, and HARQ (Hybrid ARQ) processing according to the radio bearer service, and transmits the multiplexed packets to the mobile station 105.

According to an embodiment of the present invention, it is possible to efficiently transmit data with various QoS requirements over a radio network.

Conventionally, there is a problem in that ARQ entities will increase with increase of data types transmitted over the radio network even though data are transmitted with the same QoS requirement. According to an embodiment of the present invention, it is possible to reduce the ARQ entities because data with the same QoS requirement are multiplexed.

### [Structure of an upper node station]

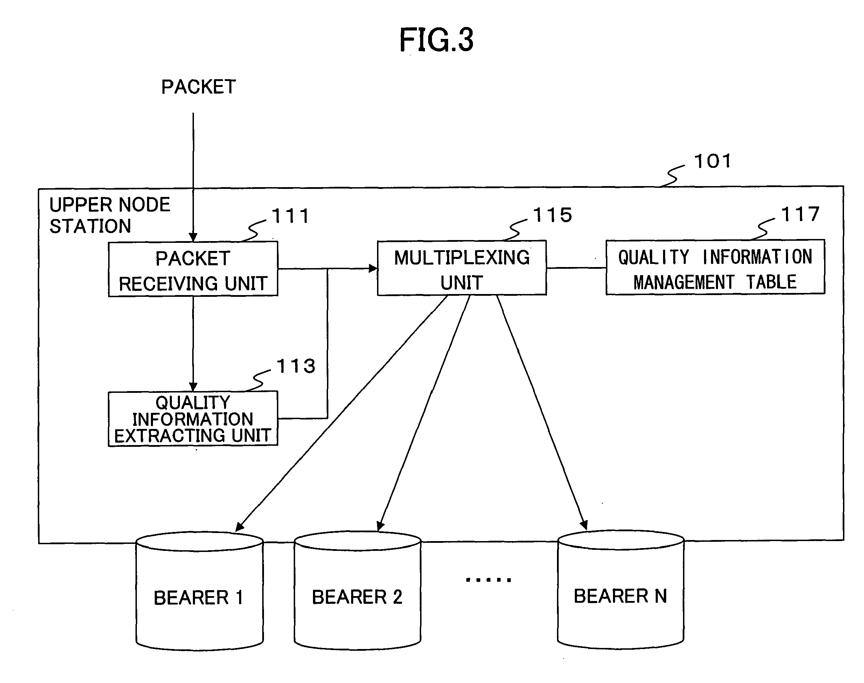

With reference to Fig. 3, the structure of the upper node station 101 is described in detail. Fig. 3 shows a block diagram of the upper node station 101 in accordance with an embodiment of the present invention. Fig. 3 specifically shows the multiplexer (MUX) in Fig. 1.

The upper node station 101 includes a packet receiving unit 111, a quality information extracting unit 113, and a multiplexing unit 115.

The packet receiving unit 111 receives a packet from the connected network.

The quality information extracting unit 113 extracts quality information from the packet received by the packet receiving unit 111. The quality information may be information about a QoS class. Alternatively, the quality information may be any information which characterizes a bearer service. For example, when a source address (src) and a destination address (dest) included in one IP packet header are the same (or within the same range) as those included in another IP packet header and either a protocol or a port number of the one IP packet header is the same (or within the same range) as those included in the another IP packet header, those packets are likely to use the same service. Accordingly, their QoS requirements are assumed to be the same. In this manner, the IP packet header may be treated as quality information. Alternatively, the requirement for delay may be treated as quality information, when the requirement for delay is included in the packet.

The multiplexing unit 115 assigns each of the packets received by the packet receiving unit 111 to a bearer service based on the quality information extracted by the quality information extracting unit 113 to multiplex the packets. As described above, the bearer service may be determined either by default or upon connecting a call. The multiplexing unit 115 may attach an identifier (bearer ID) to the packet to assign each of the packets to the bearer service. Specifically, the multiplexing unit 115 may include the bearer ID in a frame protocol (FP) header to assign each of the packets to the bearer service. Alternatively, the multiplexing unit 115 may use an IP header used for data transport between the upper node station 101 and the base station 103 to assign each of the packets to the bearer service.

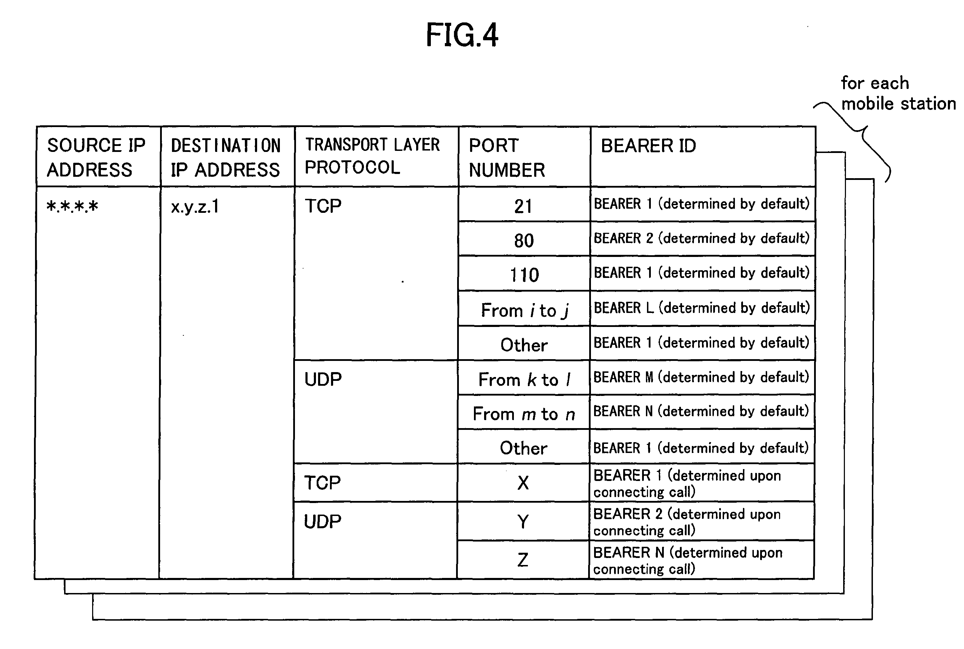

The upper node station 101 may further include a quality information management table 117 to multiplex the packets. The multiplexing unit 115 may assign each of the packets to the bearer service based on the quality information referring to the quality information management table 117. Fig. 4 shows an example of the quality information management table 117. The quality information management table 117 manages a correspondence between IP packet headers and bearer services to be assigned for each mobile station. The quality information management table 117 manages a table for each mobile station. Specifically, the quality information management table 117 manages a source IP address, a destination IP address, a transport layer protocol, a port number, and a bearer ID for each mobile station. The source IP address is a given address in a source network and the destination IP address is an address for identifying a destination mobile station. A service is determined based on the transport layer protocol and the port number. As described above, the addresses, the protocol, and the port number may be within their respective predetermined ranges. When this quality information is extracted from the header of the packet received by the upper node station 101, the multiplexing unit 115 identifies a bearer ID referring to the quality information management table 117 to multiplex the packets into the bearer service corresponding to the identified bearer ID.

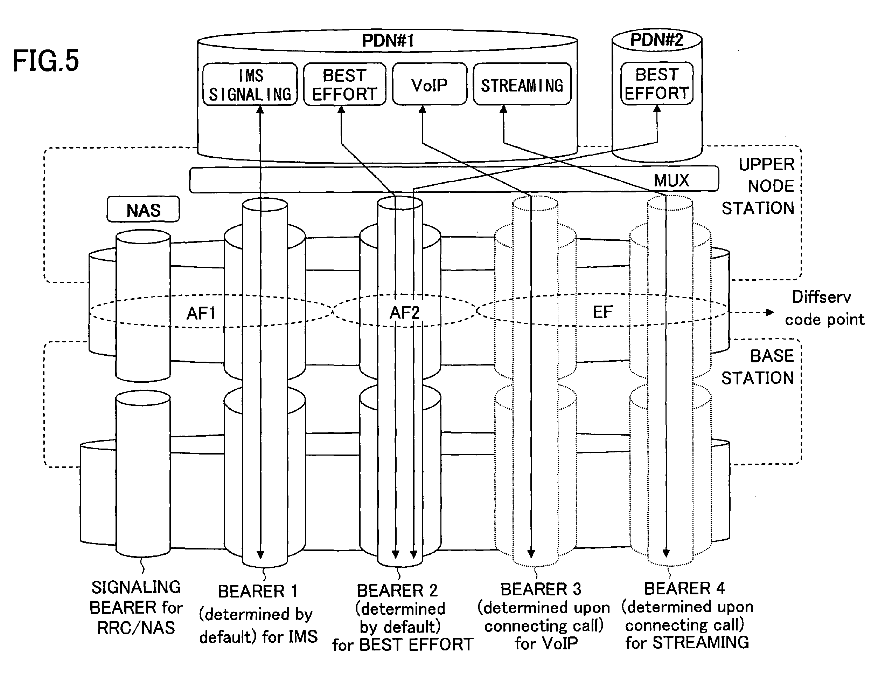

Fig. 5 shows an example of multiplexing various data. The upper node station 101 multiplexes packets based on each QoS requirement and assigns the packets with the same QoS requirement to the same bearer service. The bearer service is also assigned (mapped) to the corresponding Diffserv class used for a transport channel between the upper node station 101 and the base station 103.

Including a bearer ID in a transport protocol header in this manner allows for quality control which satisfies the QoS requirement according to the bearer ID.

### [Data flowchart]

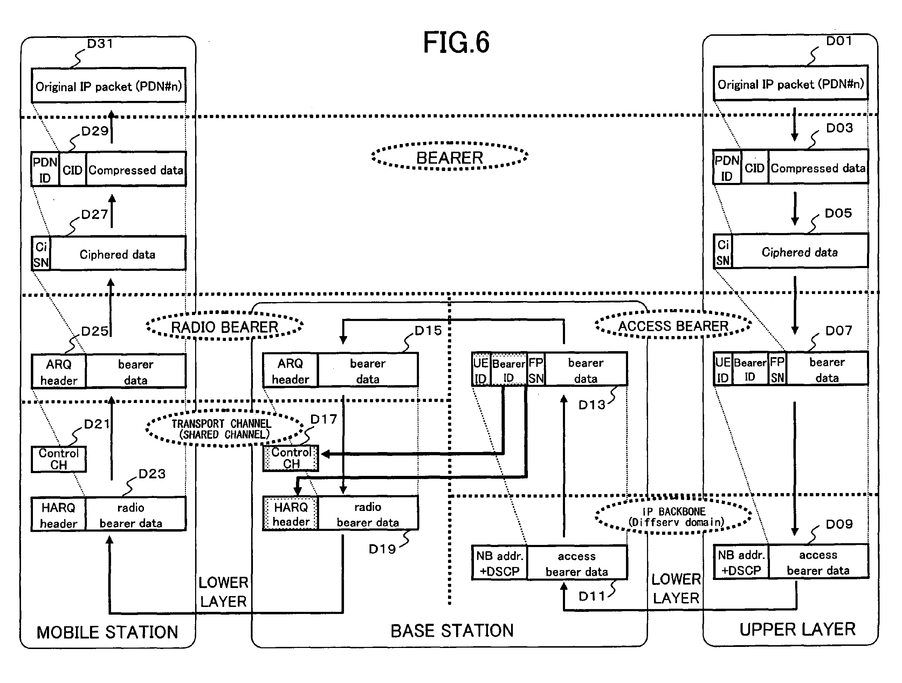

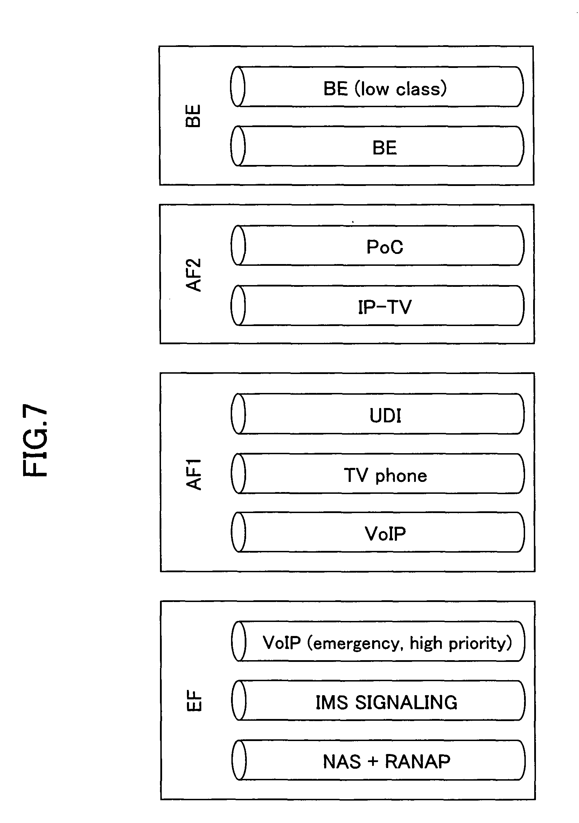

With reference to Figs. 6 and 7, a data flowchart from the upper node station 101 to the mobile station 105 is described in detail. Fig. 6 shows a data flowchart of a packet transmission method in accordance with an embodiment of the present invention. Fig. 7 shows an example of a relationship between bearer services and Diffserv classes.

When the upper node station 101 receives a packet (D01), the upper node station 101 header-compresses (D03) and ciphers (D05) the packet (D01) according to the bearer service.

Then, the upper node station 101 performs FP (frame protocol) processing on the ciphered packet (D05) according to the access bearer service and attaches a bearer ID to the ciphered packet (D05).

Then, the upper node station 101 assigns (D09) the packet with the bearer ID to a Diffserv class (Diffserv domain) in the IP backbone network (D07). As shown in Fig. 7, the upper node station may assign plural bearer IDs to a single Diffserv class.

The upper node station 101 transmits (D11) this packet (D09) to the base station 103 at a lower layer. The base station 103 reconstructs the packet (D13) from the received packet (D09). The base station 103 performs ARQ processing according to the radio bearer service and attaches (D15) an ARQ header to the packet (D13) to transmit the packet to the mobile station 105 (D15). In addition, the base station 103 generates (D19) an HARQ header using the bearer ID, when the base station 103 performs scheduling and HARQ processing according to the radio bearer service. Since plural bearer services are multiplexed upon HARQ processing, a mobile station ID (UE ID) is used on a control channel (D17) in order for the mobile station 105 to extract an appropriate packet from the multiplexed services. The base station 103 transmits the packet to the mobile station 105 on a transport channel.

The mobile station 105 reconstructs (D25, D27, D29) the packet from the received packet (D21, D23) and finally reconstructs the original packet (D31).

According to an embodiment of the present invention, it is possible to efficiently transmit data with various QoS requirements over a radio network.

This international patent application is based on Japanese Priority Application No. 2006-077817 filed on March 20, 2006, the entire contents of which are incorporated herein by reference.

## Claims

1. An upper node station for transmitting received packets to a mobile station via a base station, comprising:
a quality information extracting unit configured to extract quality information from the received packets; and
a multiplexing unit configured to assign each of the received packets to a bearer service based on the extracted quality information to multiplex the received packets.

2. The upper node station as claimed in Claim 1, wherein:
the multiplexing unit includes an identifier for the bearer service in a frame protocol header to assign each of the received packets to the bearer service.

3. The upper node station as claimed in Claim 1, further comprising:
a quality information management table configured to associate a packet header with the bearer service for each mobile station, wherein
the multiplexing unit identifies the bearer service based on a packet header in each of the received packets referring to the quality information management table to multiplex the received packets.

4. A packet transmission method of transmitting packets received by an upper node station to a mobile station via a base station, comprising the steps of:
extracting quality information from the received packets;
assigning each of the received packets to a bearer service based on the extracted quality information to multiplex the received packets; and
transmitting the multiplexed packets to the mobile station via the base station.

5. The packet transmission method as claimed in Claim 4, wherein:
the step of assigning comprises the step of identifying the bearer service based on a packet header in each of the received packets referring to a quality information management table, which associates a packet header with the bearer service for each mobile station, to multiplex the received packets.
